# EUROPEAN PATENT APPLICATION

(11) **EP 2 538 544 A1**
(43) Date of publication of application: **26.12.2012**
(21) Application number: 11744482.8
(22) Date of filing: 26.01.2011
(51) Int. Cl.: H02N 2/00

(54) **PIEZOELECTRIC ACTUATOR MECHANISM**

(30) Priority: 17.02.2010 JP 2010031954
(71) Applicant: Ishikawa Prefecture, Kanazawa-shi, Ishikawa 920-8580 (JP); Sigma Koki Co., Ltd, Saitama 350-1297 (JP); Nikko Company, Hakusan-shi Ishikawa 924-8686 (JP); Tokyo Institute of Technology, Tokyo 152-8500 (JP)
(72) Inventor: TAKANO Masahiro, Ishikawa 920-8203 (JP); HIROSAKI Kenichi, Ishikawa 920-8203 (JP); SHINTANI Ryuji, Ishikawa 920-8203 (JP); YOSHIDA Yuta, Ishikawa 920-8203 (JP); MINAMIKAWA Toshiharu, Ishikawa 920-8203 (JP); NAKANO Kouichi, Ishikawa 920-8203 (JP); NAGATA Takuya, Ishikawa 924-0838 (JP); MAKINO Shou, Ishikawa 924-0838 (JP); ICHIMURA Satoru, Ishikawa 924-0838 (JP); YOSHIDA Takashi, Ishikawa 924-8686 (JP); ISHIDA Masayuki, Ishikawa 924-8686 (JP); KAWAI Hiroshi, Ishikawa 924-8686 (JP); TAKIMOTO Mikio, Ishikawa 924-8686 (JP); NAKAMURA Kentaro, Tokyo 152-8550 (JP)
(74) Representative: Greenwood, John David
(86) International application number: PCT/JP2011/051419
(87) International publication number: WO 2011/102193

(57) **Abstract**

The present invention provides a piezoelectric actuator mechanism that is suited for automatic operation in the adjustment of a mirror holder in an optical system, or in the positioning of a movable table of a linear stage, that has a short entire length, and is capable of performing a compact and high-precision position/angle adjustment and positioning. The piezoelectric actuator mechanism comprises: a screw-driven feeding mechanism that is comprised of a feed screw 11 and a feed screw nut 14; a disc-shaped rotor 17 mounted on the rear-end face of the feed screw nut 14; an ultrasonic motor 18 having a piezoelectric vibrator 19 that comes in contact with the circumference face of the rotor 17; and a driven mounting portion that is pressed against the leading end of the feed screw 11 by spring force, and displaced and positioned by the feeding operation of the feed screw. The driven mounting portion can be made to be a mirror holder 1 to be used in an optical system, or a movable table 21 of a linear stage, for example.

## Description

### Technical Field

The present invention relates to a piezoelectric actuator mechanism, and more particularly, to a piezoelectric actuator mechanism in which a screw feed mechanism is driven by a piezoelectric vibrator to perform displacement, angle adjustment, or positioning of a mount portion located at a leading end of a feed screw.

### Background Art

For example, in the field of optical equipment, it is necessary to adjust positions or angles for alignment, or perform accurate positioning of various optical members such as a lens and a mirror. As a drive source therefor, there is known an electric actuator in which a speed reduction mechanism is coupled to a plunger of an electromagnetic motor and an output shaft thereof is pressed against one side of a mirror holder, or a piezoelectric actuator including an ultrasonic motor which uses a piezoelectric vibrator. The ultrasonic motor has the following function. Through application of a voltage to an electrode provided to the piezoelectric vibrator, the vibrator leading end performs an expansion and contraction movement or an elliptical movement. A member to be driven is brought into frictional contact to the vibrator leading end, to thereby execute intermittent linear motion or rotational motion. The ultrasonic motor is described in detail in, for example, Patent Document 1.

As a piezoelectric actuator for optical alignment, in which an ultrasonic motor is incorporated, there is known a piezoelectric actuator disclosed in Patent Document 2. This piezoelectric actuator has a structure in which a stage plate for holding a mirror is supported at three points, and outer peripheries of three adjustment screw members arranged at those three support portions are grasped by pairs of jaw members of three piezoelectric actuators, respectively. By biasing the piezoelectric actuator, the jaw members are set in motion in a screw rotational direction of the adjustment screw member to feed the adjustment screw member by a frictional force generated between the adjustment screw member and the jaw members, to thereby perform alignment adjustment of the stage plate. In this structure, the piezoelectric vibrator performs expansion and contraction motion, and with low speed motion of the pair of jaw members, the adjustment screw member is fed by the frictional force. With high-speed return, the jaw members slip over the adjustment screw member, and thus the adjustment screw member is intermittently fed.

### Citation List

### Patent Document

[Patent Document 1] JP 2008-54407 A
[Patent Document 2] JP 08-251950 A

### Summary of Invention

### Technical Problem

In the field of various types of precision equipment, in particular, optical equipment, along with enhancement and increase in accuracy of various testing technologies, there is an increasing demand for accurate automatic operation in, for example, mirror angle adjustment and a focusing mechanism for an objective lens. However, in a case where the above-mentioned electromagnetic motor is used as a drive source, when a small electromagnetic motor is selected for downsizing, a speed reduction mechanism and a feeding mechanism of a ball screw and the like are necessary so as to obtain a thrust necessary for angle adjustment, and thus the entire length of the electric actuator becomes long. Therefore, when multiple automatic-operation type mirror holders are arranged in an interferometer system and the like, the entire device structure is upsized.

In the piezoelectric actuator for an optical alignment screw disclosed in Patent Document 2, the actuator is arranged on the lateral portion of the alignment screw, and hence the entire length can be shortened, and as a linear drive actuator (positioning device), the piezoelectric actuator can be downsized while maintaining high accuracy. However, the piezoelectric actuator employs an impact drive method, and hence the motion speed is as slow as 0.02 mm/sec. or less. Thus, the piezoelectric actuator is not appropriate for automatic testing.

The present invention has been made to solve the above-mentioned problems, and has an object and challenge to provide a small and highly accurate piezoelectric actuator mechanism having a short entire length, which is capable of performing position/angle adjustment or positioning and is appropriate for adjustment of a mirror holder in an optical system or for automatic operation of positioning of a movable table in a linear stage.

### Solution to Problems

According to the present invention, there is provided (1) a piezoelectric actuator mechanism, comprising: a screw feed mechanism comprising a feed screw and a feed screw nut; a disc-shaped rotor mounted on a rear end surface of the feed screw nut; an ultrasonic motor having a piezoelectric vibrator which comes into contact with a peripheral surface of the disc-shaped rotor; and a mount portion to be driven, which is pressed against a leading end of the feed screw by a spring force, and is displaced and positioned by feed motion of the feed screw.

According to one mode of the present invention, there is provided (2) the piezoelectric actuator mechanism as described in (1) above, wherein the mount portion to be driven is a mirror holder supported at one surface thereof by a fixed support in a pivotable manner.

Accordingtoanothermodeofthepresent invention, there is also provided (3) the piezoelectric actuator mechanism as described in (1) above, wherein the mount portion to be driven is a movable table of a linear stage.

Accordingtoanothermodeofthepresent invention, there is also provided (4) the piezoelectric actuator mechanism as described in (1) or (2) above, wherein the disc-shaped rotor is mounted on the rear end surface of the feed screw in a replaceable manner, and the ultrasonic motor is mounted in such a manner that a position thereof is adjustable in an axial direction of the piezoelectric vibrator in accordance with an outer diameter of the disc-shaped rotor.

According to another mode of the present invention, there is also provided (5) the piezoelectric actuator mechanism as described in (1) or (2) above, wherein the disc-shaped rotor is mounted on the rear end surface of the feed screw in a replaceable manner, and the ultrasonic motor is mounted so as to be replaceable in accordance with an outer diameter of the disc-shaped rotor.

Further, according to another mode of the present invention, there is provided (6) a piezoelectric actuator mechanism, comprising: a screw feed mechanism comprising a feed screw and a feed screw nut; a disc-shaped rotor mounted on a rear end surface of the feed screw nut; an ultrasonic motor having a piezoelectric vibrator which comes into contact with one end surface of the disc-shaped rotor; and a mount portion to be driven, which is pressed against a leading end of the feed screw by a spring force, and is displaced and positioned by feed motion of the feed screw.

According to another mode of the present invention, there is also provided (7) the piezoelectric actuator mechanism as described in (6) above, wherein the disc-shaped rotor is formed to have an outer diameter larger than an outer diameter of the feed screw nut, and the ultrasonic motor comes into contact with the one end surface of the disc-shaped rotor, which surface faces the feed screw nut.

### Advantageous Effects of Invention

According to the present invention, it is possible to obtain the piezoelectric actuator mechanism, which does not require a conventional electromagnetic motor or speed reduction mechanism and thus has a short entire length and is downsized, and further has high accuracy and fine feed resolution, which makes it possible to perform automatic operation of linear feed motion, tilt motion, and positioning of the mount portion to be driven with high accuracy.

### Brief Description of Drawings

[FIG. 1] A vertical sectional view of a piezoelectric actuator mechanism for a mirror holder according to Example 1 of the present invention.
[FIG. 2] A rear view of the piezoelectric actuator mechanism when viewed from the arrow F of FIG. 1.
[FIG. 3] A perspective view of the piezoelectric actuator mechanism illustrated in FIG. 1.
[FIG. 4] A plan view illustrating a linear stage according to Example 3 of the present invention.
[FIG. 5] A side view of the linear stage of FIG. 4 when viewed from a table moving direction.
[FIG. 6] A side view of the linear stage of FIG. 4 when viewed from a lateral direction with respect to the table moving direction. [FIG. 7] A vertical sectional view of a piezoelectric actuator mechanism for a mirror holder according to Example 4 of the present invention.
[FIG. 8] A perspective view of an electric mirror holder using a conventional electric actuator.

### Mode for Carrying Out the Invention

Next, a piezoelectric actuator mechanism according to an example of the present invention is described with reference to the drawing of a conventional example. In the example of the present invention, a mount portion to be driven is a mirror holder, and the piezoelectric actuator mechanisms are arranged at two corner portions located on a diagonal line of one end surface of the mirror holder. Each of the piezoelectric actuator mechanisms causes an ultrasonic motor to rotate and drive a feed screw nut of a screw feed mechanism, and thus a feed screw which is threadably mounted to the nut is brought into contact with the mirror holder. Then, in a case where the positions of the two feed screws are assumed as two apex positions of a triangle, a fixed support is provided to a position corresponding to the remaining one apex, and the mirror holder is supported by three points including the two feed screws and the one fixed support. An ultrasonic motor is arranged in a direction orthogonal to an axis line direction of the feed screw of the piezoelectric actuator mechanism, and causes the rotational motion of the feed screw nut. Only the screw feed mechanism is arranged in the axis line direction of the piezoelectric actuator, and hence the length of the entire device is reduced.

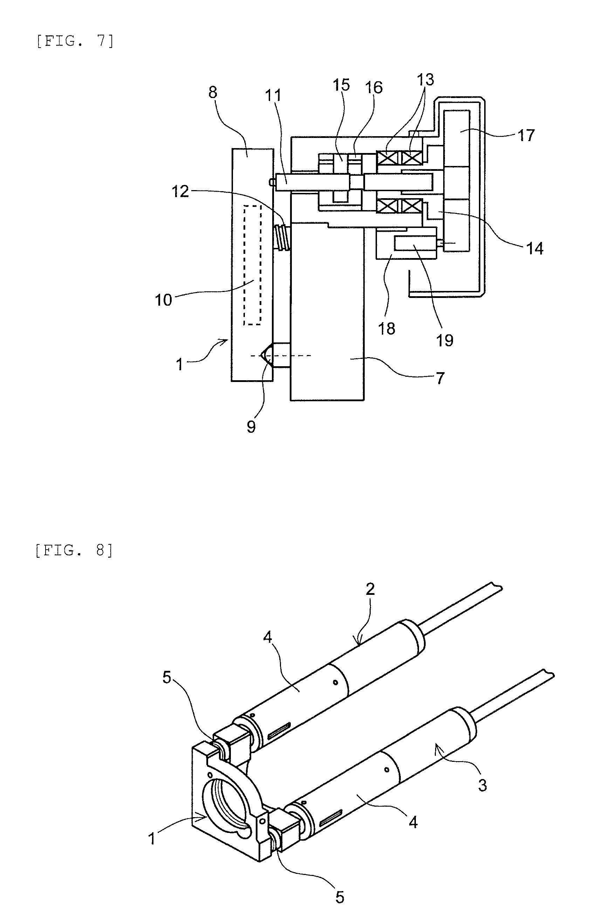

When this relationship is described in comparison to an electric mirror holder using a conventional electric actuator, as illustrated in FIG. 8, the conventional electric actuator comprises a pair of electric actuators 2 and 3 having a built-in electromagnetic motor, which is arranged on one surface of a mirror holder 1. Further, a corner portion of the mirror holder 1 is supported by a support pin (not shown) so that the mirror holder 1 can pivot. In each of the electric actuators 2 and 3, a speed reduction mechanism is coupled to an output shaft of the electromagnetic motor, and a spindle 5 is coupled to the speed reduction mechanism through an intermediation of a screw feed mechanism portion 4 in a manner allowing spindle 5 to move in and out. The spindle 5 is formed so as to come into contact with the one surface of the mirror holder 1. Through the bias of the electromagnetic motor, displacement motion and angle adjustment of the mirror holder 1 are performed. As is understood from this example, the entire length of the electrical mirror holder comprising the electric actuators 2 and 3 is very long.

### Examples

Next, various examples of the present invention are specifically described.

### Example 1

In Example 1, the piezoelectric actuator mechanism according to the present invention is applied to an angle adjustment mechanism of a mirror holder of an optical system. For example, in order to appropriately orient a mirror held by the mirror holder with respect to an optical axis of an optical device in the optical system, the mirror holder is rotated about a longitudinal axis line of the mirror center, or is rotated about a lateral axis line to perform so-called tilting motion. In this example, one corner portion of the mirror holder is supported by one support, and the rotational motion and the tilting motion are performed around this support to adjust the orientation angle of the mirror.

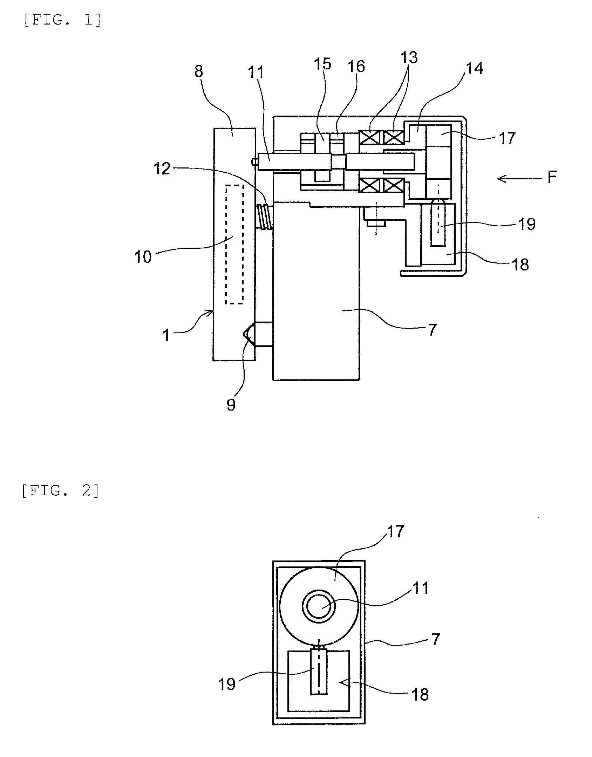

With reference to FIGS. 1 to 3, in front of a casing 7 of a piezoelectric actuator 6 (6a, 6b), which is formed into an L shape as a whole, a mount portion to be driven, in this case, a mirror holder 1 is arranged. The mirror holder 1 has a frame-shaped front plate 8, and a mirror 10 is mounted in a center portion thereof. The front plate 8 of the mirror holder 1 is supported in a turnable manner by a support pin 9 provided upright at a corner portion of the L shape of the casing 7 of the piezoelectric actuator 6. Screw feedmechanisms described later are incorporated in both end portions (arm portions) of the L-shaped casing 7, respectively, and leading ends of two feed screws 11 protruded from the casing 7 of each actuator 6 come into contact with the front plate 8 of the mirror holder 1 at positions on a diagonal line. With this, mirror holder 1 is supported in a three-point support mode by the support pin 9 and the leading ends of the two feed screws 11. Further, a tension spring 12 is mounted between the front plate 8 of the mirror holder 1 and the casing 7, and thus the front plate 8 is always brought into pressure contact with the leading ends of the feed screws 11.

The two screw feedmechanisms incorporated in the casing 7 have the same structure in this example, and hence one of the two screw feed mechanisms is described herein. The feed screw 11 is threadably mounted to a feed screw nut 14 which is axially supported to the casing 7 so as to be freely rotatable via a bearing 13, and further, a key 15 fixed to a midway portion of the outer periphery of the feed screw 11 engages with a key groove 16 formed in an inner wall of the casing 7 so as to be slidable in the axial direction. With this, the rotation of the feed screw 11 is inhibited. Note that, as a mechanism for inhibiting the rotation of the feed screw 11, the portions in which the key and the key groove are formed may be inverted. The key extending in the axial direction may be formed in the inner wall of the casing, and the key groove that engages with the key may be formed at a flange portion fixed to the outer periphery of the feed screw 11.

The feed screw nut 14 has a rear end portion formed into a larger-diameter disc shape, and a large-width circular ring (member denoted by reference symbol 17) is mounted to the disc portion of the rear end portion in a fixed or mountable/removable manner. The circular ring is referred to as a rotor 17 herein. Ultrasonic motor 18 is mounted at a lateral position of the rotor 17 and inside the casing 7. A leading end of a piezoelectric vibrator 19 of the ultrasonic motor 18 is brought into frictional contact with an outer peripheral surface of the rotor 17. When a predetermined voltage is applied to an electrode (not shown) provided to the piezoelectric vibrator 19, the leading end of the vibrator 19 performs minute repetitive circular motion. Thus, the rotor 17 rotates around its center by a frictional force, and the rotational force is transmitted to the feed screw nut 14. As a result, with the screw feed action, the feed screw 11 performs entering/retracting motion in the axial direction. Note that, the rotational direction and the rotational speed of the rotor 17 are controlled by the voltage applied to the piezoelectric vibrator 19.

A pair of piezoelectric actuators 6 arranged at the corner portions of the front plate 8 of the mirror holder 1 is individually controlled, and thus the moving amount of each feed screw 11 is individually controlled as well. With the movement of the feed screw 11, that is, forward and backward movement thereof, the mirror holder 1 pressed against the leading ends of the feed screws 11 by the tension spring 12 is rotated or performs various types of tilt motion around the position of the support pin 9 as one support.

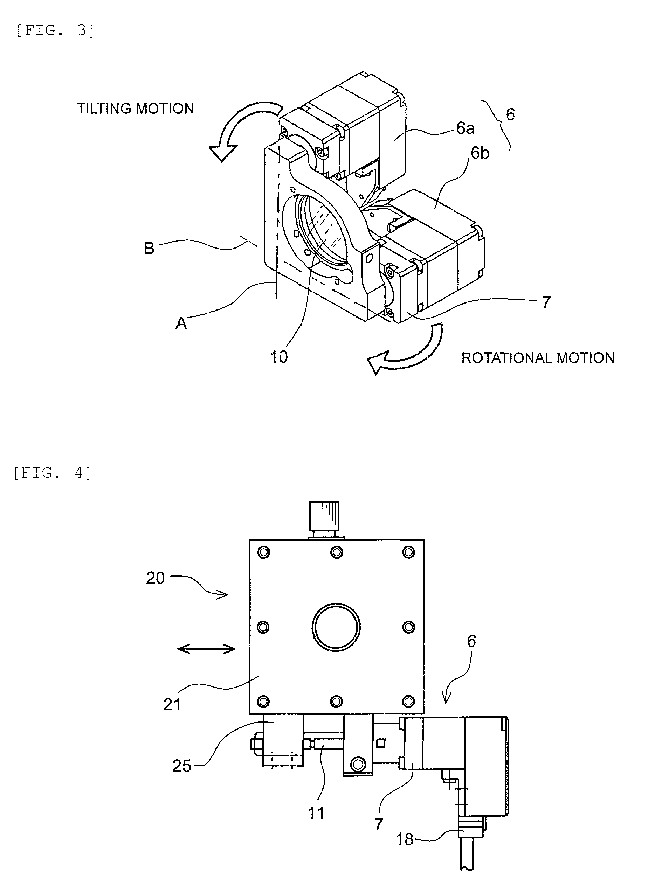

For example, when the feed screws 11 of both of the piezoelectric actuators 6a and 6b perform the expansion and contraction motion, the mirror holder 1 performs tilt motion corresponding to the expansion and contraction amount of the feed screws 11 with the support pin 9 as the only support. Further, when the feed screw of the upper piezoelectric actuator 6a of FIG. 3 is stopped and the feed screw of the lower piezoelectric actuator 6b performs extending (forward) motion, the mirror holder 1 performs rotational motion with the positions of the leading end of the stopped feed screw and the support pin 9 as supports about a line A connecting the positions of those supports. In contrast, when the feed screw of the upper piezoelectric actuator extends and the feed screw of the lower piezoelectric actuator 6b is in the stopped state, the "tilting" motion is performed about a line B connecting the positions of the leading end of the stopped feed screw and the support pin. Other desired rotational or tilt motion may be performed with the combination of the forward and backward movements of the two feed screws and the movement amount thereof.

As described above, in the piezoelectric actuator 6 of this example, the ultrasonic motor 18 is not arranged on the axis line of the rotor 17, but is arranged on the lateral side of the rotor 17, that is, on the lateral side of the screw feed mechanism. In addition, the rotation of the rotor 17 is converted into linear motion operation of the feed screw. Therefore, the entire length of the device (length of the mirror 10 in the axis line direction) becomes extremely short. Further, a speed reduction gear mechanism and the like are not provided, and hence the entire structure is compact.

In a case where the angle of the mirror holder 1 is required to be adjusted more finely in the present invention, this angle adjustment may be achieved by replacing the rotor 17 with another rotor 17 having a larger outer diameter, which can provide an effect similar to that obtained when a speed reducer is provided. Therefore, the rotor 17 is mounted to the feed screw nut 14 in a replaceable manner, and further, the ultrasonic motor 18 which is held in contact with the rotor 17 is mounted in a manner allowing the position of rotor 17 to be with respect to the casing 7 in an axial direction of the vibrator 19.

In a modified example of Example 1, the ultrasonic motor 18 is mounted to the casing 7 in a replaceable manner. When the rotor 17 having a large outer diameter is mounted, the ultrasonic motor 18 is replaced with another ultrasonic motor 18 which corresponds to the outer diameter of this rotor 17. With this, the leading end of the piezoelectric vibrator 19 comes in contact with the outer periphery of the rotor 17 at an appropriate pressing pressure.

### Example 2

In Example 2, two piezoelectric actuators are provided for support at three points including one fixed support and the leading ends of two feed screws, and the mirror holder performs two types of motion including rotational motion about the longitudinal axis line (vertical axis line) and "tilting" motion about the lateral axis line (horizontal axis line). In Example 2, one piezoelectric actuator is provided, and the mirror holder is supported by two fixed supports in a manner so that it can pivot. Positions of those fixed supports and an arrangement position of the piezoelectric actuator may be appropriately selected so that only one of the above-mentioned tilting motion and the rotational motion about the longitudinal axis line is performed by the expansion and contraction motion of one feed screw.

### Example 3

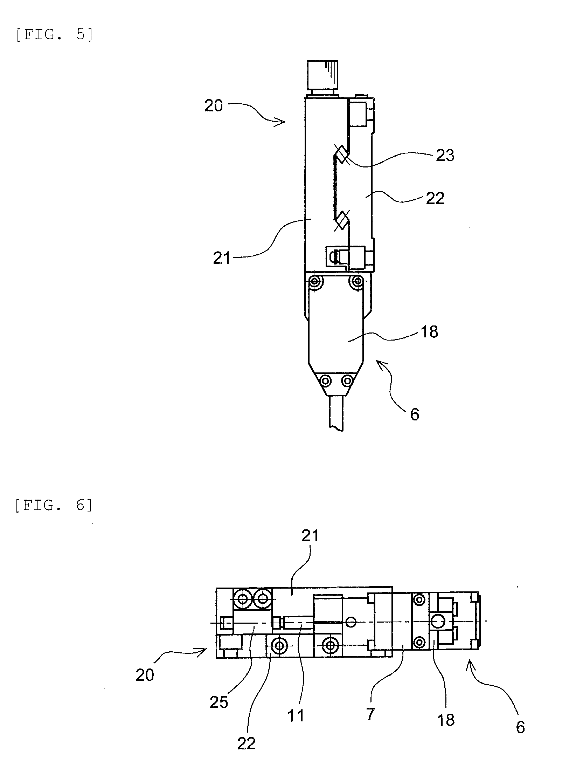

FIGS. 4 to 6 are views illustrating a piezoelectric actuator mechanism according to Example 3 of the present invention. In Example 1, the mount portion to be driven is a mirror holder, but Example 3 is a case of a linear stage 20 in which the mount portion to be driven is a movable table 21. The movable table 21 is placed on a base 22 in a slidable manner via a linear guide mechanism 23 called a cross roller guide. As the linear guide mechanism 23, instead of the cross roller guide, for example, a known rolling-ball circulating type linear motion guide may be employed. Those linear guide mechanisms comprise a rail portion having a pair of roller or ball rolling grooves provided in parallel to each other in an upper surface of the base. The movable table also comprises roller or ball rolling grooves so as to correspond to the rolling grooves of the rail portion. Between those grooves, a large number of rollers or balls are housed so that they can roll.

On one side of the base, the piezoelectric actuator 6 according to the present invention is arranged, and further, an overhang bracket 25 is fixed to the side portion of the movable table 21. The piezoelectric actuator mechanism in Example 3 has substantially the same structure as that described in Example 1, and comprises the feed screw 11 protruded from an actuator main body portion, the feed screw nut to which the feed screw 11 is threadably mounted, a member inhibiting the feed screw 11 from rotating, a disc-like rotor mounted to the rear end portion of the feed screw nut, and the ultrasonic motor 18 arranged on a lateral side of the actuator main body portion and including the piezoelectric vibrator having a leading end which comes in contact with the peripheral surface of the rotor. The leading end of the feed screw 11 comes in contact with the bracket 25 of the movable table 21, and the movable table 21 is biased by the tension spring (not shown) so that the bracket 25 and the feed screw 11 are always brought into pressure contact with each other.

Through voltage application to the ultrasonic motor 18, the piezoelectric vibrator 19 performs circular motion in a direction in which the rotor 17 is rotated. Along with the rotation of the rotor 17, the screw feed mechanism causes the feed screw 11 to advance or retract, and thus the movable table 21 causes the base 22 to perform linear motion via the bracket 25. Restitution motion, that is, the retracting motion of the movable table 21 is caused by the retracting motion of the feed screw 11, and the movable table 21 is returned to the retracted position by the tension spring. Through control of the stop position of the feed screw 11, the position of the movable table 21 is controlled and determined.

Also in Example 3, the piezoelectric actuator mechanism is arranged on a lateral side with respect to the moving direction of the movable table, and hence the linear stage does not become long in the moving direction as a whole, and has a compact structure. Further, by forming the rotor to be brought into contact with the piezoelectric vibrator comprising a disc having a larger outer diameter, it is possible to provide a highly-accurate piezoelectric actuator mechanism having a short entire length, which can perform linear motion with finer feeding resolution. A speed reduction mechanism which is required in the case of the electromagnetic motor is unnecessary, and thus many advantages can be achieved such that a linear stage with a simple structure is obtained.

### Example 4

FIG. 7 is a vertical sectional view of a piezoelectric actuator mechanism for a mirror holder according to Example 4 of the present invention which is similar to FIG. 1. In Example 4, the arrangement of the ultrasonic motor 18, a contact mode of the piezoelectric vibrator 19 with respect to a counterpart member, and a shape of the disc-shaped rotor 17 are slightly different from those in FIG. 1, but the rest is similar to those in FIG. 1. Therefore, the same parts as those in the configuration of FIG. 1 are denoted by the same reference symbols, and overlapping description of those parts are omitted as much as possible.

In FIG. 7, the disc-shaped rotor 17 mounted to the feed screw nut 14 is formed so that its outer diameter is larger than that of the feed screw nut 14. Further, the ultrasonic motor 18 which rotates and drives the rotor 17 is arranged in parallel to the feed screw 11. Specifically, as illustrated in FIG. 7, the ultrasonic motor 18 is arranged so that the leading end of the piezoelectric vibrator 19 is brought into contact with an inner end surface (rear surface) side of the rotor 17, that is, one end surface of the rotor 17, which surface faces the feed screw nut 14. Through the repetitive circular movement of the leading end of the piezoelectric vibrator 19, the rotor 17 is frictionally fed in such a manner that the one end surface of the rotor 17 is rotated about the center of the rotor. In this manner, with the screw feed action between the feed screw nut 14 and the feed screw 11, the feed screw 11 performs entering/retracting motion in the axial direction to perform various types of adjustment of the mirror holder 1. In this example, the ultrasonic motor is arranged at a position on the inner surface side of the disc-shaped rotor 17. Therefore, the device length of the screw feed mechanism is not enlarged in the axis line direction, and hence the entire device is further downsized.

### Reference Signs List

- 1: mirror holder
- 2, 3: electric actuator
- 4: speed reduction mechanism
- 5: output shaft
- 6: piezoelectric actuator
- 7: casing
- 8: front plate
- 9: fixed support (support pin)
- 10: mirror
- 11: feed screw
- 12: tension spring
- 14: feed screw nut
- 15: key
- 16: key groove
- 17: circular ring (rotor)
- 18: ultrasonic motor
- 19: piezoelectric vibrator
- 20: linear stage
- 21: movable table
- 22: base
- 23: linear guide mechanism
- 25: bracket

## Claims

1. A piezoelectric actuator mechanism, comprising: a screw feed mechanism comprising a feed screw and a feed screw nut; a disc-shaped rotormountedona rear end surface of the feed screw nut; an ultrasonic motor having a piezoelectric vibrator which comes into contact with a peripheral surface of the disc-shaped rotor; and a mount portion to be driven, which is pressed against a leading end of the feed screw by a spring force, and is displaced and positioned by feed motion of the feed screw.

2. The piezoelectric actuator mechanism as described in claim 1, wherein the mount portion to be driven is a mirror holder supported at one surface thereof by a fixed support in a pivotable manner.

3. The piezoelectric actuator mechanism as described in claim 1, wherein the mount portion to be driven is a movable table of a linear stage.

4. The piezoelectric actuator mechanism as described in claim 1 or 2, wherein the disc-shaped rotor is mounted on the rear end surface of the feed screw in a replaceable manner, and the ultrasonic motor is mounted in such a manner that a position thereof is adjustable in an axial direction of the piezoelectric vibrator in accordance with an outer diameter of the disc-shaped rotor.

5. The piezoelectric actuator mechanism as described in claim 1 or 2, wherein the disc-shaped rotor is mounted on the rear end surface of the feed screw in a replaceable manner, and the ultrasonic motor is mounted so as to be replaceable in accordance with an outer diameter of the disc-shaped rotor.

6. A piezoelectric actuator mechanism, comprising: a screw feed mechanism comprising a feed screw and a feed screw nut; a disc-shaped rotor mounted on a rear end surface of the feed screw nut; anultrasonic motor having a piezoelectric vibrator which comes into contact with one end surface of the disc-shaped rotor; and a mount portion to be driven, which is pressed against a leading end of the feed screw by a spring force, and is displaced and positioned by feed motion of the feed screw.

7. The piezoelectric actuator mechanism as described in claim 6, wherein the disc-shaped rotor is formed to have an outer diameter larger than an outer diameter of the feed screw nut, and the ultrasonic motor comes into contact with the one end surface of the disc-shaped rotor, which surface faces the feed screw nut.
